# EUROPEAN PATENT APPLICATION

(11) **EP 4 693 229 A1**
(43) Date of publication of application: **11.02.2026**
(21) Application number: 24780475.0
(22) Date of filing: 27.03.2024
(51) Int. Cl.: G06V 40/13, G02B 7/08, G03B 15/00

(54) **BIOLOGICAL INFORMATION ACQUISITION DEVICE AND BIOLOGICAL INFORMATION ACQUISITION METHOD**

(30) Priority: 29.03.2023 JP 2023053714
(71) Applicant: Panasonic Intellectual Property Management Co., Ltd., Kadoma-shi, Osaka 571-0057 (JP)
(72) Inventor: YAMADA Taichi, Kadoma-shi, Osaka 571-0057 (JP); NAKAMURA Hideyuki, Kadoma-shi, Osaka 571-0057 (JP)
(74) Representative: Eisenführ Speiser
(86) International application number: PCT/JP2024/012286
(87) International publication number: WO 2024/204373

(57) **Abstract**

This biological information acquisition device is provided with: a camera that captures an image of a fingertip of a subject in a non-contact state by each of a first focus control and a second focus control; an acquisition unit that acquires a first captured image captured by the first focus control; a measurement unit that measures the size of the fingertip with respect to the entire area of the first captured image; a determination unit that determines, on the basis of the size of the fingertip, the increment range of focus of the camera for capturing an image during the second focus control; and a control unit that acquires one of second captured images captured by the second focus control.

## Description

### TECHNICAL FIELD

The present disclosure relates to a biometric information acquisition device and a biometric information acquisition method.

### BACKGROUND ART

Patent Literature 1 discloses a method for performing fingerprint recognition in which a feature of each of a plurality of fingers of a subject is extracted using a mobile device, and a biometric identifier including the extracted feature is generated and stored in a memory. A method for performing fingerprint recognition includes capturing an image of a plurality of fingers of a subject by a camera, a storage medium, an instruction stored in the storage medium, and a mobile device that executes the instruction, detecting the plurality of fingers drawn in the image by a fingertip detection algorithm to identify respective fingertip segments of the plurality of fingers, extracting features of the plurality of fingers from the respective identified fingertip segments, generating a biometric identifier including the extracted features, and storing the biometric identifier in the memory.

### CITATION LIST

### PATENT LITERATURE

Patent Literature 1: JP2020-501264A

### SUMMARY OF INVENTION

### TECHNICAL PROBLEM

In the configuration of Patent Literature 1, a marking or a guide for instructing a user to place his/her fingers is displayed on a display to guide the placement of the fingers of the user to be imaged. However, for example, since the size and thickness of the finger is different for each user depending on factors such as gender and age, there is a possibility that the image of the plurality of fingers captured by the method of Patent Literature 1 in the related art is not in focus on the fingerprint.

The present disclosure has been devised in consideration of the above-mentioned circumstances of the related art, and an object of the present disclosure is to provide a biometric information acquisition device and a biometric information acquisition method that can more efficiently acquire fingerprint data suitable for fingerprint authentication in a non-contact state.

### SOLUTION TO PROBLEM

The present disclosure provides a biometric information acquisition device including a camera configured to capture an image of a fingertip of a subject in a non-contact state under each of a first focus control and a second focus control, an acquisition unit configured to acquire a first captured image captured under the first focus control, a measurement unit configured to measure a size of the fingertip of the subject with respect to an entire area of the first captured image, a determination unit configured to determine a focus step size of the camera under the second focus control based on the size of the fingertip and cause the camera to capture an image within a focus section, within which an image is captured under the second focus control, at the focus step size, and a control unit configured to acquire any one second captured image among M (M is an integer of 2 or more) second captured images captured under the second focus control.

In addition, the present disclosure provides a biometric information acquisition method performed by a biometric information acquisition device capable of acquiring a captured image obtained by capturing an image of a fingertip of a subject, and the biological information acquisition method includes capturing an image of a finger of the subject in a non-contact state under a first focus control by a camera, acquiring a first captured image captured under the first focus control, measuring a size of the fingertip of the subject with respect to an entire area of the first captured image, determining a focus step size of the camera for capturing an image under a second focus control different from the first focus control based on the size of the fingertip, capturing an image within a focus section, within which an image is captured, at the focus step size by the second focus control by the camera, and acquiring any one second captured image among M (M is an integer of 2 or more) second captured images captured under the second focus control.

### ADVANTAGEOUS EFFECTS OF INVENTION

According to the present disclosure, it is possible to acquire the fingerprint data suitable for fingerprint authentication in a non-contact state.

### BRIEF DESCRIPTION OF DRAWINGS

[FIG. 1] FIG. 1 is a block diagram illustrating an internal configuration example of a terminal device according to Embodiment 1.
[FIG. 2] FIG. 2 is a sequence diagram illustrating an operational procedure example of the terminal device according to Embodiment 1.
[FIG. 3] FIG. 3 is a sequence diagram illustrating the operational procedure example of the terminal device according to Embodiment 1.
[FIG. 4] FIG. 4 is a diagram illustrating an example of acquiring a first captured image.
[FIG. 5] FIG. 5 is a diagram illustrating an example of acquiring a second captured image.
[FIG. 6] FIG. 6 is a diagram illustrating a first alert screen example and a second alert screen example.
[FIG. 7] FIG. 7 is a diagram illustrating a third alert screen example and an instruction screen example.
[FIG. 8] FIG. 8 is a diagram illustrating an example of a biometric information acquisition system according to Embodiment 2.
[FIG. 9] FIG. 9 is a block diagram illustrating an internal configuration example of the biometric information acquisition system according to Embodiment 2.
[FIG. 10] FIG. 10 is a sequence diagram illustrating an operational procedure example of the biometric information acquisition system according to Embodiment 2.

### DESCRIPTION OF EMBODIMENTS

### (Background of Present Disclosure)

In the related art, there is a fingerprint registration method in which fingerprint registration is performed by a terminal device owned by a user. However, in a case where the user captures an image of a fingerprint by himself/herself, the fingerprint is not in focus when the user captures an image by bringing the fingertip too close to the terminal device, and the fingertip displayed on the terminal device becomes small when the user captures an image by moving the fingertip away from the terminal device, which makes it difficult to visually recognize whether the fingerprint is in focus. In addition, in general, a terminal device such as a smartphone or a tablet terminal carried by a user includes a wide-angle camera, and thus it is difficult to capture an image in focus on the fingerprint of a fingertip.

Therefore, in the related art, a method for acquiring a fingerprint image in which it is possible to confirm whether the fingerprint of the fingertip is in focus by displaying an enlarged image obtained by enlarging an image of the fingertip shown in a captured image on a screen of a terminal device is considered. However, in a case where the user adjusts a position of the fingertip while viewing the enlarged image, it is difficult for the user to intuitively grasp a position of a hand with respect to the terminal device because a magnification of the enlarged image displayed on the screen is not known, and when the user moves his/her hand more than necessary, his/her fingers tend to move out of a field of view of the camera, making it difficult for the user to adjust the position of his/her fingertip so that the fingerprint is in focus.

Therefore, it is desirable to capture a plurality of images of the held fingertip at different focus distances and acquire an image suitable for fingerprint authentication among the plurality of captured images. However, since the thickness of the finger is different for each user or each finger, it is difficult to adjust the position of the fingertip so as to focus on the fingerprint of the fingertip.

Therefore, in each embodiment described below, an example of a biometric information acquisition device and a biometric information acquisition method that can acquire fingerprint data suitable for fingerprint authentication in a non-contact state will be described.

Hereinafter, the embodiment in which a configuration and an operation of the biometric information acquisition device and the biometric information acquisition method according to the present disclosure are specifically disclosed will be described in detail with reference to the drawings as appropriate. However, unnecessarily detailed description may be omitted. For example, the detailed description of well-known matters and the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims.

### (Embodiment 1)

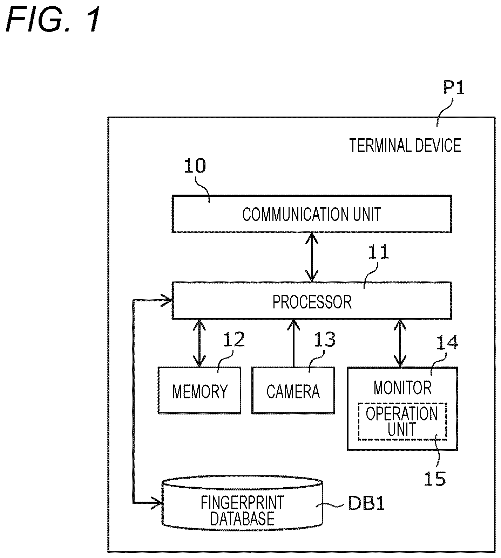

An internal configuration example of a terminal device P1 according to Embodiment 1 will be described with reference to FIG. 1. FIG. 1 is a block diagram illustrating the internal configuration example of the terminal device P1 according to Embodiment 1.

The terminal device P1 according to Embodiment 1 as an example of a biometric information acquisition device captures an image of a fingerprint of any one finger (for example, a middle finger or an index finger) that is freely selected or designated, and acquires a fingerprint image that can be used for fingerprint authentication from the captured image. The terminal device P1 includes a communication unit 10, a processor 11, a memory 12, a camera 13, a monitor 14, and a fingerprint database DB1.

The communication unit 10 includes a communication interface circuit for transmitting and receiving data. The communication unit 10 may be connected to an external device (for example, a monitor (not illustrated) or the like) and an external storage medium (for example, microSD (registered trademark), universal serial bus (hereinafter, referred to as "USB", registered trademark"), or the like) so as to be capable of wired communication or wireless communication. Here, the wireless communication is, for example, communication via a wireless local area network (hereinafter, referred to as an "LAN") such as Wi-Fi (registered trademark).

The processor 11, which is an example of an acquisition unit, a determination unit, a control unit, and an calculation unit, is implemented using, for example, a central processing unit (hereinafter, referred to as a "CPU") or a field programmable gate array (hereinafter, referred to as an "FPGA"), and executes various processing and controls in cooperation with the memory 12. Specifically, the processor 11 refers to programs and data stored in the memory 12 and executes the programs to realize various functions related to capturing an image of a fingerprint and acquiring fingerprint data.

When an application capable of acquiring a fingerprint is started by a user operation, the processor 11 generates a control instruction to cause the camera 13 to start capturing images and outputs the control instruction to the camera 13. The processor 11 acquires a captured image output from the camera 13, and acquires a captured image (an example of a first captured image) obtained by capturing an image of the entire hand or at least one finger of the user, and a focus distance (an example of an autofocus distance or a manual focus distance, and a first focus distance) of the camera 13 when capturing the captured image.

The processor 11 detects any one fingertip from the acquired captured image. When it is determined that the fingertip is detected from the captured image, the processor 11 specifies which finger (for example, a middle finger, an index finger, or a ring finger) the detected finger is, and measures the size (area) of the fingertip with respect to the field of view of the camera 13. The processor 11 determines a focus distance at which imaging of the fingerprint of the fingertip starts (hereinafter, referred to as "imaging start focus distance") and a focus distance at which imaging of the fingerprint of the fingertip ends (hereinafter, referred to as "imaging end focus distance") based on the specified information of the fingertip, the measured size of the fingertip, and the acquired focus distance. The processing of specifying which finger the detected finger is not essential and may be omitted.

The processor 11 determines a focus step size of a focus section by the camera 13 based on the measured size of the fingertip and the acquired focus distance.

The processor 11 generates a manual imaging command to capture images within the focus section from the imaging start focus distance to the imaging end focus distance at the determined focus step size by a manual control, and outputs the manual imaging command to the camera 13.

The processor 11 calculates first to N-th (N is an integer of 2 or more) focus distances at which images are captured by the camera 13 within the focus section from the imaging start focus distance to the imaging end focus distance based on information on the focus step size and the acquired focus distances. The first to N-th focus distances calculated here are included within the focus section and indicate different focus distances.

When the imaging from the imaging start focus distance to the imaging end focus distance by the camera 13 is started, the processor 11 acquires one captured image captured by the camera 13 and information on the manual focus distance at which the captured image is captured. When it is determined that a focus distance (an example of a second focus distance) corresponding to the captured image acquired from the camera 13 matches any of the first to N-th focus distances, the processor 11 acquires the captured image and temporarily stores the captured image in the memory 12. On the other hand, when it is determined that the focus distance corresponding to the captured image output by the camera 13 does not match any of the first to N-th focus distances or the captured image having the same focus distance as the corresponding focus distance has been temporarily stored, the processor 11 omits the temporary storage of the captured image and discards (deletes) the captured image.

The processor 11 acquires and temporarily stores M captured images captured at M (M is an integer of 2 or more, M ≤ N) focus distances different from each other among the focus distances corresponding to the first to N-th focus distances, and then calculates a score indicating a degree of focus on the fingerprint shown in each of the M captured images. The processor 11 extracts the captured image having the highest score among the calculated scores. The processor 11 determines whether the score of the extracted captured image is equal to or greater than a threshold value.

Note that the threshold value described above is a threshold value indicating that the fingerprint shown in the captured image is in focus.

When it is determined that the score of the captured image is equal to or greater than the threshold value, the processor 11 acquires, as the fingerprint data of the user, a fingerprint image obtained by cutting out an area in which the fingertip is shown from the captured image or feature data indicating the individuality of the user extracted from the fingerprint shown in the fingerprint image. The processor 11 stores (registers) the acquired fingerprint data and user information corresponding to the fingerprint data in the fingerprint database DB1 in association with each other. The processor 11 performs fingerprint authentication based on collation between the acquired fingerprint data and the fingerprint data stored (registered) in the fingerprint database DB1.

The feature data may be extracted by using a known technique (for example, a minutia method or a frequency feature analysis method). For example, the minutia method is a method for extracting feature data of a fingerprint by detecting an end point or a branch point (a division) indicating a break of a cut line of the fingerprint in ridge lines of the fingerprint. The frequency feature analysis method is a method for extracting fingerprint features from a waveform of a frequency converted from the unevenness of a fingerprint as a frequency.

The memory 12 includes, for example, a random access memory (hereinafter, referred to as a "RAM") as a work memory used when each processing of the processor 11 is performed, and a read only memory (hereinafter, referred to as a "ROM") storing a program and data defining each operation of the processor 11. The RAM temporarily stores data or information generated or acquired by the processor 11. The program that defines the operation of the processor 11 is written in the ROM. The memory 12 temporarily stores each of the M captured images output from the processor 11.

The memory 12 records a table, a trained learning model, and the like for determining the focus step size of the camera 13 within the determined focus section based on the size of the field of view of the camera 13 and the size (area) of the fingertip with respect to the size of the field of view of the camera 13. The table and the learning model may determine the focus step size of the camera 13 based on the size of the field of view of the camera 13, the size (area) of the fingertip with respect to the size of the field of view of the camera 13, and the type of the fingertip (for example, the middle finger, the index finger, or the like).

The camera 13 includes at least a lens (not illustrated) and an image sensor (not illustrated). The image sensor is, for example, a solid-state imaging element such as a charged-coupled device (hereinafter referred to as a "CCD") or a complementary metal oxide semiconductor (hereinafter referred to as a "CMOS"), and converts an optical image formed on an imaging surface into an electric signal.

The camera 13 performs imaging by an autofocus control or a manual focus control based on a control instruction to start imaging input by the processor 11. The camera 13 outputs the captured image and the information on the focus distance at which the captured image is captured to the processor 11 in association with each other.

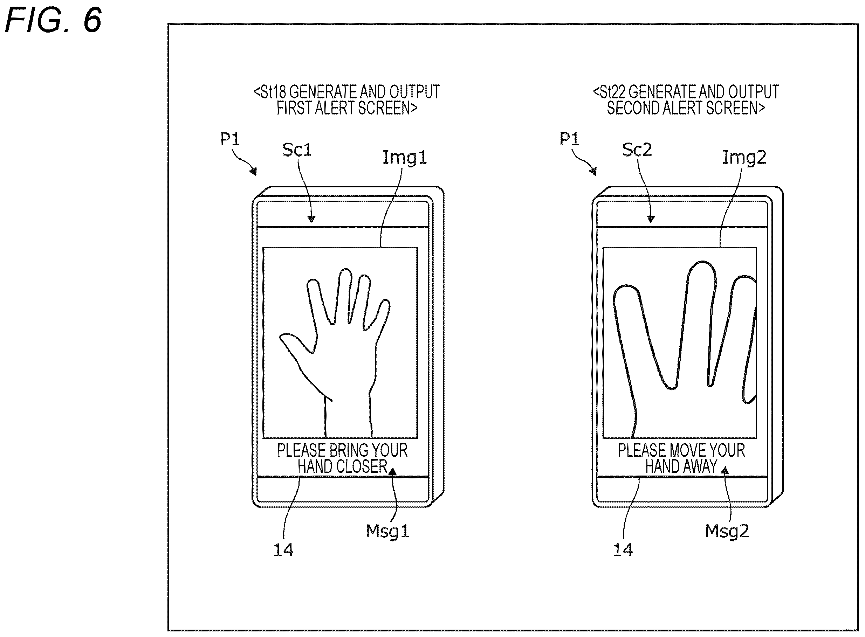

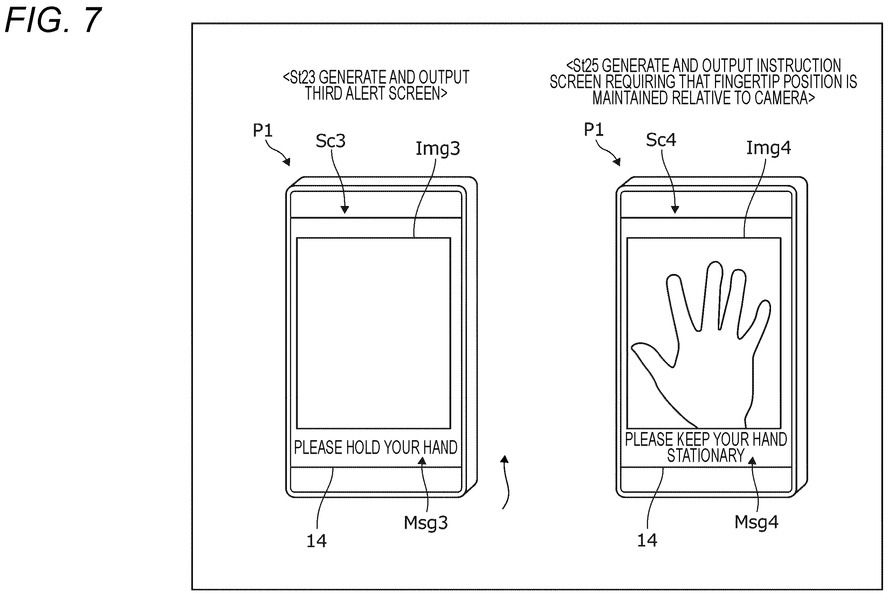

The monitor 14 is implemented by using, for example, a liquid crystal display (hereinafter referred to as "LCD") or an organic electroluminescence (hereinafter referred to as "EL"). The monitor 14 outputs and displays the captured image captured by the camera 13 or various screens (for example, a first alert screen Sc1 and a second alert screen Sc2 illustrated in FIG. 6, a third alert screen Sc3 and an instruction screen Sc4 illustrated in FIG. 7, and the like) generated by the processor 11.

The monitor 14 is included in the terminal device P1 and may be a touch interface implemented by a touch panel. In such a case, the monitor 14 has a function as the operation unit 15, receives an input operation by the user, and outputs a result of the input operation by the user to the processor 11.

The operation unit 15 can receive an input operation such as an operation for starting an application, acquisition (registration) of the fingerprint data, a reacquisition operation, and an input operation of user information on a user, and outputs the result of the input operation to the processor 11. The operation unit 15 may be realized as a touch panel of the monitor 14 described above. The operation unit 15 may include a microphone (not illustrated) and receive a voice input operation based on the voice of the user.

The fingerprint database DB1 is a so-called storage, and is implemented by a storage medium such as a flash memory, a hard disk drive (hereinafter referred to as "HDD"), or a solid state drive (hereinafter referred to as "SSD"). The fingerprint database DB1 stores (registers) and manages the fingerprint data and the user information output from the processor 11 (for example, the name, age, gender, personal information, or the like of the user) for each user. The fingerprint database DB1 may be configured separately from the terminal device P1, and in such a case, the fingerprint database DB1 is connected to the terminal device P1 via the communication unit 10 so as to enable data communication.

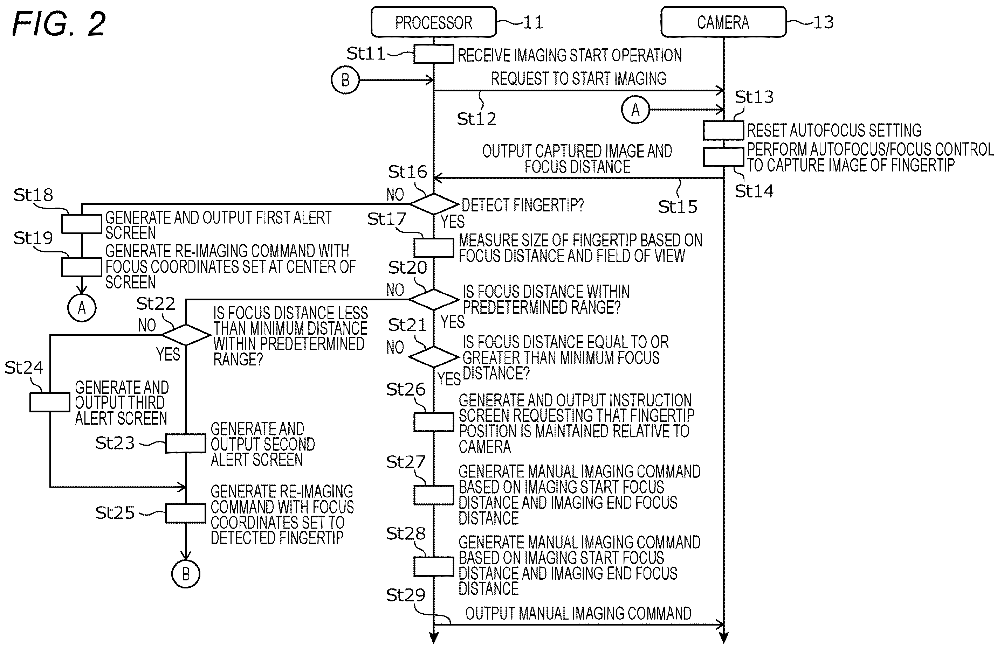

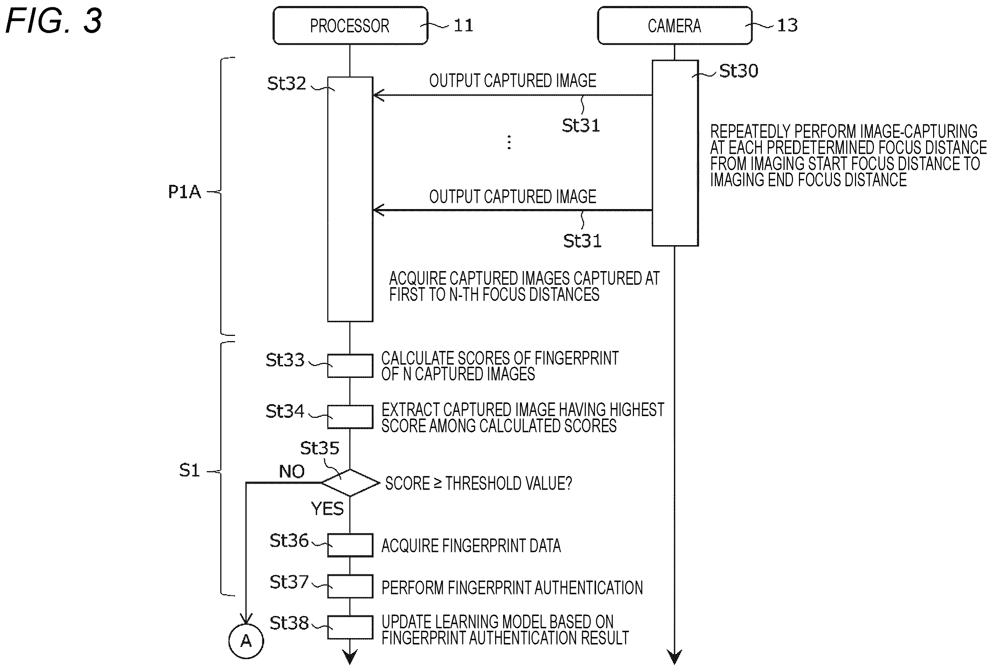

Next, an operation procedure of the terminal device P1 according to Embodiment 1 will be described with reference to FIGS. 2 and 3. FIG. 2 is a sequence diagram illustrating an operational procedure example of the terminal device P1 according to Embodiment 1. FIG. 3 is a sequence diagram illustrating an operational procedure example of the terminal device P1 according to Embodiment 1. In the description of each of FIGS. 2 and 3, in order to make the description easy to understand, an example will be described in which a predetermined range that is a range of the focus distance within which the captured image suitable for fingerprint authentication can be captured is 15 cm to 17 cm, but it is needless to say that the present disclosure is not limited thereto.

Here, when performing the registration of the fingerprint data, the terminal device P1 performs the processing of steps St11 to St36. When the fingerprint authentication using the fingerprint data is performed, the terminal device P1 performs the processing of step St11 to step St38.

The processor 11 starts the application capable of performing the registration or authentication of the fingerprint of the user based on an imaging start operation by the user received by the operation unit 15 (St11). The processor 11 generates the control instruction to cause the camera 13 to start capturing images and outputs the control instruction to the camera 13 (St12).

The camera 13 resets current autofocus setting (for example, setting of an autofocus distance, a focus position, or the like) of the camera 13 based on the control command transmitted from the processor 11 (St13). The camera 13 performs the autofocus control based on the control command transmitted from the processor 11, and captures an image of the fingertip of the user (St14). The camera 13 outputs the captured image and the information on the focus distance at which the captured image is captured to the processor 11 in association with each other (St15).

The processor 11 performs image analysis on the captured image output from the camera 13 and performs detection processing of detecting a fingertip including at least a first joint. The processor 11 determines whether the fingertip is detected from the captured image (St16). The detection processing of the fingertip performed here is, for example, processing of detecting a contour (shape) of the fingertip shown in the captured image by the image analysis.

When it is determined in the processing of step St16 that the fingertip is detected from the captured image (St16, YES), the processor 11 specifies which finger (for example, the middle finger, the index finger, the ring finger, or the like) the detected fingertip is, and measures the size (area) of the fingertip with respect to the field of view of the camera 13 (St17). Note that the processing of specifying which finger the detected fingertip is not essential and may be omitted.

On the other hand, when it is determined in the processing of step St16 that the fingertip is not detected from the captured image (St16, NO), the processor 11 generates the first alert screen Sc1 requesting the user to place his/her hand within the field of view of the camera 13, and outputs and displays the first alert screen Sc1 on the monitor 14 (St18). Further, the processor 11 generates a re-imaging command (the control command) to set focus coordinates of the camera 13 at a position corresponding to a center position of the monitor 14, and outputs the re-imaging command to the camera 13 (St19).

After the processing of step St19, the camera 13 resets the current autofocus setting of the camera 13 based on the control command transmitted from the processor 11 (St13). The camera 13 sets the coordinates to be focused by the autofocus to a position corresponding to the center (a center position) of the monitor 14 based on the re-imaging command (the control command), and then performs the autofocus control to re-capture an image of the fingertip (St14).

The processor 11 determines whether the focus distance at which the captured image is captured is within the predetermined range (for example, 15 cm to 17 cm) (St20).

Here, the predetermined range is a range of a focus distance within which fingerprint data (the captured image or feature data) suitable for fingerprint authentication can be acquired. The predetermined range is, for example, an optional focus distance range determined based on specifications (for example, the number of pixels, resolution, or the like) of the camera 13 included in the terminal device P1, imaging parameters, specifications (for example, the number of pixels of a fingerprint image, resolution, or the like) of fingerprint data required by a fingerprint authentication engine that performs the fingerprint authentication using acquired fingerprint data, or the like, and is set in advance. Further, the predetermined range may be a range within which N captured images can be captured in processing of step St32 to be described later.

The number N of captured images is any number of two or more determined based on a distance (that is, a focus section) between the imaging start focus distance and the imaging end focus distance to be described later and the focus step size.

When it is determined in the processing of step St20 that the focus distance at which the captured image is captured is within the predetermined range (St20, YES), the processor 11 further determines whether the focus distance at which the captured image is captured is equal to or greater than the minimum focus distance (St21).

The minimum focus distance referred to here is within the predetermined range and indicates a minimum focus distance necessary for capturing N captured images at the first to N-th focus distances, which are different focus distances, in processing of step St32 to be described later.

For example, when the predetermined range for acquiring the fingerprint data is 15 cm to 17 cm, the focus step size of the camera 13 is 2mm, and the first and second captured images are captured, the necessary minimum focus distance is 15.2 cm that is 2 mm away from 15 cm that is the minimum value of the predetermined range. Accordingly, the camera 13 can capture the image of the fingertip at each of the two focus distances of 15.0 mm and 15.2 mm. The minimum focus distance may be determined based on the number M of captured images to be acquired and the focus step size of the camera 13.

On the other hand, when it is determined in the processing of step St20 that the focus distance at which the captured image is captured is not within the predetermined range (for example, 15 cm to 17 cm) (St20, NO), the processor 11 further determines whether the focus distance at which the captured image is captured is less than the minimum distance (= 15 cm) within the predetermined range (St22).

When it is determined in the processing of step St22 that the focus distance at which the captured image is captured is less than the minimum distance (= 15 cm) within the predetermined range (St22, YES), the processor 11 generates the second alert screen Sc2 requesting the user to move the hand away from the camera 13, and outputs and displays the second alert screen Sc2 on the monitor 14 (St23).

On the other hand, when it is determined in the processing of step St22 that the focus distance at which the captured image is captured is not less than the minimum distance (= 15 cm) within the predetermined range (St22, NO), the processor 11 generates the third alert screen Sc3 requesting the user to bring the hand close to the camera 13, and outputs and displays the third alert screen Sc3 on the monitor 14 (St24). When it is determined in the processing of step St22 that the focus distance is not less than the minimum distance (= 15 cm) within the predetermined range, the focus distance is greater than the maximum distance (= 17 cm) within the predetermined range.

The processor 11 generates the re-imaging command (the control command) to set the focus coordinates of the camera 13 at a fingertip position detected from the captured image, that is, the fingertip position with respect to the field of view (the image sensor) of the camera 13, and outputs the re-imaging command to the camera 13 (St25).

After the processing of step St25, the camera 13 resets the current autofocus setting of the camera 13 based on the control command transmitted from the processor 11 (St13). The camera 13 sets the coordinates to be focused by the autofocus to the position corresponding to the fingertip position detected from the captured image based on the re-imaging command (the control command), and then performs the autofocus control to re-capture the image of the fingertip (St14).

When it is determined in the processing of step St21 that the focus distance at which the captured image is captured is equal to or greater than the minimum focus distance (St21, YES), the processor 11 generates the instruction screen Sc4 requesting the user to maintain the current fingertip position with respect to the camera 13, and outputs and displays the instruction screen Sc4 on the monitor 14 (St26).

The processor 11 determines the imaging start focus distance and the imaging end focus distance at which the first to N-th captured images are captured based on the focus distance at which the captured image is captured, and determines the focus step size of the camera 13 within the focus section based on the size (area) of the fingertip with respect to the field of view of the camera 13. Specifically, the processor 11 determines the focus distance at which the captured image is captured as the imaging start focus distance, and determines the minimum distance (= 15 cm) within the predetermined range as the imaging end focus distance.

For example, when the size of the fingertip of the user is 40% or more with respect to the field of view of the camera 13, the terminal device P1 determines that the thickness of the fingertip of the user is large and sets the focus step size to 2 mm, and when the size of the fingertip of the user is less than 40% with respect to the field of view of the camera 13, the terminal device P1 determines that the thickness of the fingertip of the user is small and sets the focus step size to 1 mm.

The processor 11 generates the manual imaging command to capture the image of the fingertip of the user at the focus step size within the focus section from the imaging start focus distance to the imaging end focus distance, including the determined imaging start focus distance and imaging end focus distance (St27).

The imaging start focus distance may be determined as a distance away from the camera 13 by the focus step size (for example, 1 mm or 2 mm) from the focus distance at which the captured image is captured. For example, when the focus distance at which the captured image is captured is 16 mm and the focus step size is 2 mm, the processor 11 may determine the imaging start focus distance to be 16.2 mm. As a result, when the focus distance at which the captured image is captured is an optional position from the contour of the fingertip to the pad of the finger (substantially the center position of the fingerprint) in a thickness direction of the fingertip, the processor 11 more effectively prevents the imaging start focus distance from being set close to the camera 13 and on a pad side of the finger, and can more efficiently acquire an image suitable for the fingerprint data.

When the number N of captured images is a fixed value, based on the focus step size, the minimum focus distance necessary for capturing the N captured images may be calculated, and a focus distance when an image is captured by the minimum focus distance from the imaging start focus distance may be set as the imaging end focus distance. As a result, in processing of step St30 to be described later, the processor 11 can further shorten an imaging cycle of the camera 13, in which one cycle is from the imaging start focus distance to the imaging end focus distance at which imaging is performed. Therefore, the processor 11 can further shorten time required to acquire the image suitable for the fingerprint data.

The processor 11 determines the number N of captured images within the focus section based on the imaging start focus distance and the imaging end focus distance based on the focus distance at which the captured image is captured, and the focus step size based on the size of the fingertip. The processor 11 calculates the first to N-th focus distances of the N captured images captured within the focus section from the imaging start focus distance to the imaging end focus distance based on the determined number N of captured images (St28).

The processor 11 outputs the generated manual imaging command to the camera 13 (St29).

The camera 13 switches an imaging mode to manual imaging based on the manual imaging command output from the processor 11. The camera 13 periodically and repeatedly performs the imaging within the focus section at the focus step size based on the manual imaging command (St30). Based on an output command (the control command) of the captured image output from the processor 11, the camera 13 outputs, to the processor 11, one captured image captured at a timing when the output command is acquired, in association with the information on the focus distance at which the captured image is captured (St31).

The processor 11 generates a control command (output command) requesting an output of one captured image and outputs the control command to the camera 13 at a timing of performing determination (hereinafter, referred to as "temporary storage determination processing") of determining whether the one captured image captured by the camera 13 is a captured image captured at one of the first to N-th focus distances and whether the captured image is a captured image captured at one of the first to N-th focus distances and temporarily stored in the memory 12. The processor 11 acquires the one captured image output from the camera 13. The processor 11 performs the temporary storage determination processing on the acquired one captured image (St32).

When it is determined that the focus distance matches any one of the first to N-th focus distances and the captured image captured at this focus distance is not stored in the memory 12, the processor 11 outputs the acquired captured image to the memory 12 and temporarily stores the captured image in the memory 12 (St32). When it is determined that the focus distance associated with the acquired captured image does not match any one of the first to N-th focus distances or the captured image captured at this focus distance is stored in the memory 12, the processor 11 omits temporary storage of the acquired captured image.

The processor 11 generates the control command (the output command) requesting an output of one captured image again at the timing when the temporary storage determination processing of the acquired one captured image is completed, and outputs the control command to the camera 13. The processor 11 performs the temporary storage determination processing again for one captured image output from the camera 13.

The terminal device P1 repeatedly performs imaging processing from the imaging start focus distance to the imaging end focus distance by the camera 13 (processing of step St30), the output processing of the captured image (processing of step St31), and the temporary storage determination processing of each captured image by the processor 11 (processing of step St32) in parallel until M captured images among the captured images captured at the first to N-th focus distances are temporarily stored.

After the temporary storage of the M captured images is completed, the processor 11 calculates a score indicating a degree of focus on the fingerprint shown in each of the M captured images (St33). The processor 11 extracts the captured image having the highest score among the calculated scores (St34). The processor 11 determines whether the score of the extracted captured image is equal to or greater than the threshold value (St35).

When it is determined in processing of step St35 that the score of the extracted captured image is equal to or greater than the threshold value (St35, YES), the processor 11 acquires, as the fingerprint data of the user, the fingerprint image obtained by cutting out the area in which the fingertip is shown from the captured image or the feature data indicating the individuality of the user extracted from the fingerprint shown in the fingerprint image (St36). Here, when performing the registration processing of the fingerprint data of the user, the processor 11 stores (registers) the acquired fingerprint data of the user and the user information in the fingerprint database DB1 in association with each other, and ends the operation procedure illustrated in FIGS. 2 and 3.

On the other hand, when it is determined in the processing of step St35 that the score of the extracted captured image is not equal to or greater than the threshold value (St35, NO), the processor 11 switches the imaging mode of the camera 13 from the manual imaging to the autofocus imaging, generates the re-imaging command (the control command) requesting re-capturing of an image of the fingertip of the user, and outputs the re-imaging command to the camera 13.

When performing the fingerprint authentication, the processor 11 collates the acquired fingerprint data with at least one piece of fingerprint data stored (registered) in the fingerprint database DB1 to perform the fingerprint authentication of the user (St37). The processor 11 generates a fingerprint authentication result of the user and outputs the fingerprint authentication result to the monitor 14. Further, the processor 11 updates (relearns) information such as the learning model or the table for determining the focus step size based on the fingerprint authentication result of the user, the score of the fingerprint data used for fingerprint authentication, and the information on the focus step size corresponding to the fingerprint data used for fingerprint authentication (St38). When the fingerprint authentication of the user fails in the processing of step St37, the processor 11 may omit the processing of step St38.

The camera 13 switches the imaging mode from the manual imaging to the autofocus imaging based on the control command transmitted from the processor 11, and resets the current autofocus setting of the camera 13 (St13). The camera 13 performs the autofocus control based on the re-imaging command (the control command) to re-capture the image of the fingertip (St14).

As described above, the terminal device P1 according to Embodiment 1 can more efficiently acquire a captured image more suitable for fingerprint authentication.

The terminal device P1 can acquire a captured image more suitable for fingerprint authentication based on various settings (for example, the predetermined range or the like) set based on the specifications (for example, the number of pixels, resolution, or the like) or imaging parameters of the camera 13 included in the terminal device P1, the specifications (for example, the number of pixels, resolution, or the like) of the fingerprint data required by the fingerprint authentication engine, or the like.

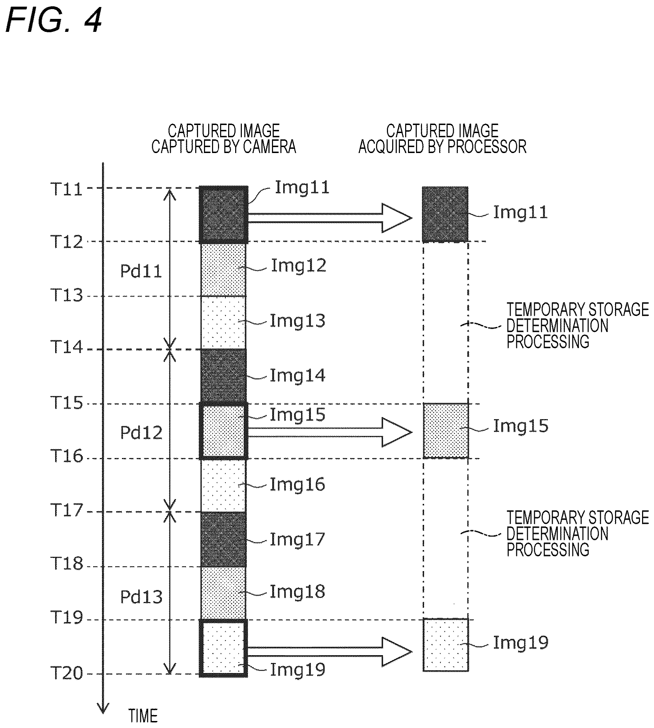

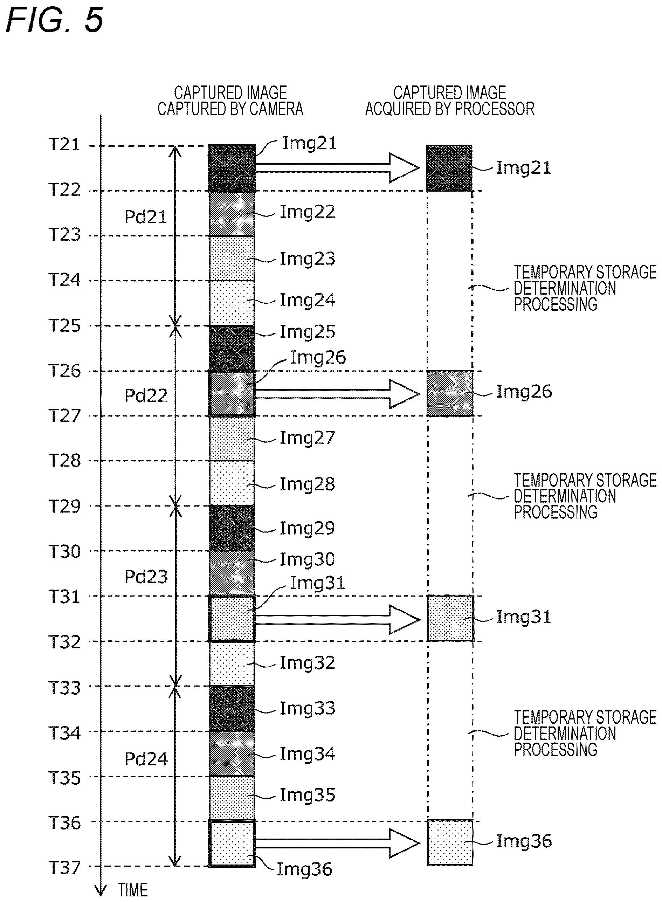

Next, a specific example of acquiring M captured images will be described with reference to FIGS. 4 and 5. FIG. 4 is a diagram illustrating an example of acquiring a first captured image. FIG. 5 is a diagram illustrating an example of acquiring a second captured image.

Based on the manual imaging command output from the processor 11, the camera 13 repeatedly performs the imaging processing of capturing images at the focus step size within the focus section, with the focus section from the imaging start focus distance to the imaging end focus distance being one cycle.

As an example of the processing of acquiring the first captured image illustrated in FIG. 4, an example of acquiring three captured images (a first captured image Img11, a second captured image Img15, and a third captured image Img19) captured at three different focus distances (first to third focus distances) will be described (M = N = 3). As an example of the processing of acquiring the second captured image illustrated in FIG. 5, an example of acquiring four captured images (a first captured image Img21, a second captured image Img26, a third captured image Img31, and a fourth captured image Img36) captured at four different focus distances (first to fourth focus distances) will be described (M = N = 4).

In the imaging processing of a first cycle (a time zone Pd11), the camera 13 captures the first captured image Img11 at the first focus distance at a time T11, captures a second captured image Img12 at a second focus distance at a time T12, and captures a third captured image Img13 at a third focus distance at a time T13.

The processor 11 acquires the first captured image Img11 captured by the camera 13 at the time T11, performs the temporary storage determination processing (the processing in step St32) on the first captured image Img11, and stores the first captured image Img11 in the memory 12. The processor 11 omits acquisition of each of the second captured image Img12 and the third captured image Img13 captured by the camera 13 during the temporary storage determination processing of the first captured image Img11.

In the imaging processing of a second cycle (a time zone Pd12), the camera 13 captures a first captured image Img14 at the first focus distance at a time T14, captures the second captured image Img15 at the second focus distance at a time T15, and captures a third captured image Img16 at the third focus distance at a time T16.

After storing the first captured image Img11 in the memory 12, the processor 11 acquires the second captured image Img15 captured by the camera 13 at the time T15, performs the temporary storage determination processing (the processing in step St32) on the second captured image Img15, and stores the second captured image Img15 in the memory 12. The processor 11 omits acquisition of each of the first captured image Img14 and the third captured image Img16 captured by the camera 13 during the temporary storage determination processing of the second captured image Img15.

In the imaging processing (a time zone Pd13) of a third cycle, the camera 13 captures a first captured image Img17 at the first focus distance at a time T17, captures a second captured image Img18 at the second focus distance at a time T18, and captures the third captured image Img19 at the third focus distance at a time T19.

After storing the second captured image Img15 in the memory 12, the processor 11 acquires the third captured image Img19 captured by the camera 13 at the time T19, performs the temporary storage determination processing (the processing of step St32) on the third captured image Img19, and stores the third captured image Img19 in the memory 12.

The processor 11 calculates the score of each of the first captured image Img11, the second captured image Img15, and the third captured image Img19 recorded in the memory 12. The processor 11 extracts the captured image having the highest score among the calculated scores, and determines whether the score of the extracted captured image is equal to or greater than the threshold value.

Here, it is determined that the score of each of the first to third captured images acquired in the example illustrated in FIG. 4 is not equal to or greater than the threshold value. The processor 11 switches the imaging mode from the manual imaging to the autofocus imaging, generates the re-imaging command (the control command) requesting re-capturing of the image of the fingertip of the user, and outputs the re-imaging command to the camera 13.

The terminal device P1 starts the processing of acquiring the second captured image illustrated in FIG. 5 when the camera 13 starts capturing the captured image based on the control command transmitted from the processor 11.

In the imaging processing (a time zone Pd21) of the first cycle, the camera 13 in the example illustrated in FIG. 5 captures the first captured image Img21 at the first focus distance at a time T21, captures a second captured image Img22 at the second focus distance at a time T22, captures a third captured image Img23 at the third focus distance at a time T23, and captures a fourth captured image Img24 at the fourth focus distance at a time T24.

In the imaging processing of the second cycle (a time zone Pd22), the camera 13 captures a first captured image Img25 at the first focus distance at a time T25, captures the second captured image Img26 at the second focus distance at a time T26, captures a third captured image Img27 at the third focus distance at a time T27, and captures a fourth captured image Img28 at the fourth focus distance at a time T28.

In the imaging processing (a time zone Pd23) of the third cycle, the camera 13 captures a first captured image Img29 at the first focus distance at a time T29, captures a second captured image Img30 at the second focus distance at a time T30, captures the third captured image Img31 at the third focus distance at a time T31, and captures a fourth captured image Img32 at the fourth focus distance at a time T32.

In the imaging processing (a time zone Pd24) of the fourth cycle, the camera 13 captures a first captured image Img33 at the first focus distance at a time T33, captures a second captured image Img34 at the second focus distance at a time T34, captures a third captured image Img35 at the third focus distance at a time T35, and captures the fourth captured image Img36 at the fourth focus distance at a time T36.

The processor 11 acquires the captured image captured by the camera 13 at a timing at which the temporary storage determination processing of the captured image can be performed. First, the processor 11 acquires the first captured image Img21 captured by the camera 13 at the time T21, performs the temporary storage determination processing (the processing in step St32) on the first captured image Img21, and stores the first captured image Img21 in the memory 12. The processor 11 omits acquisition of each of the second captured image Img22, the third captured image Img23, the fourth captured image Img24, and the first captured image Img25 captured by the camera 13 during the temporary storage determination processing of the first captured image Img21.

After storing the first captured image Img21 in the memory 12, the processor 11 acquires the second captured image Img26 captured by the camera 13 at the time T26, performs the temporary storage determination processing (the processing in step St32) on the second captured image Img26, and stores the second captured image Img26 in the memory 12. The processor 11 omits acquisition of each of the third captured image Img27, the fourth captured image Img28, the first captured image Img29, and the second captured image Img30 captured by the camera 13 during the temporary storage determination processing of the second captured image Img26.

After storing the second captured image Img26 in the memory 12, the processor 11 acquires the third captured image Img31 captured by the camera 13 at the time T31, performs the temporary storage determination processing (the processing of step St32) on the third captured image Img31, and stores the third captured image Img31 in the memory 12. The processor 11 omits acquisition of each of the fourth captured image Img32, the first captured image Img33, the second captured image Img34, and the third captured image Img35 captured by the camera 13 during the temporary storage determination processing of the third captured image Img31.

After storing the third captured image Img31 in the memory 12, the processor 11 acquires the fourth captured image Img36 captured by the camera 13 at the time T36, performs the temporary storage determination processing (the processing in step St32) on the fourth captured image Img36, and stores the fourth captured image Img36 in the memory 12. The processor 11 omits acquisition of a captured image (not illustrated) captured by the camera 13 during the temporary storage determination processing of the fourth captured image Img36.

The processor 11 calculates the score of each of the first captured image Img21, the second captured image Img26, the third captured image Img31, and the fourth captured image Img36 recorded in the memory 12. The processor 11 extracts the captured image having the highest score among the calculated scores, and determines whether the score of the extracted captured image is equal to or greater than the threshold value.

Here, it is determined that the score of any one captured image having the highest score among the first to fourth captured images acquired in the example illustrated in FIG. 5 is equal to or greater than the threshold value. The processor 11 acquires, as the fingerprint data of the user, a fingerprint image obtained by cutting out an area in which the fingertip is shown from a captured image having a score equal to or higher than the threshold value or the feature data indicating the individuality of the user extracted from the fingerprint shown in the fingerprint image. The processor 11 stores (registers) the acquired fingerprint data in the fingerprint database DB1 in association with the user information on the user corresponding to the fingerprint data.

In the example described above, in order to simplify the description, the example in which the time of the temporary storage determination processing for all the captured images is the same has been described as an example, but it is needless to say that the present disclosure is not limited thereto.

In the example described above, in order to simplify the description, the example in which all the captured images corresponding to the first to N-th focus distances are acquired has been described (that is, N = M), but the number of captured images acquired and temporarily stored may be M among the captured images corresponding to the first to N-th focus distances (that is, N ≠ M).

Next, various screens output (displayed) to the monitor 14 of the terminal device P1 during a process of acquiring the captured image of the fingerprint will be described with reference to FIGS. 6 and 7. FIG. 6 is a diagram illustrating a first alert screen Sc1 example and a second alert screen Sc2 example. FIG. 7 is a diagram illustrating a third alert screen Sc3 example and an instruction screen Sc4 example.

It goes without saying that each message illustrated in the first alert screen Sc1, the second alert screen Sc2, the third alert screen Sc3, and the instruction screen Sc4 is an example, and the present disclosure is not limited thereto.

The first alert screen Sc1 is generated in the processing of step St18 of the terminal device P1 when it is determined that at least one fingertip is not detected from the captured image. The first alert screen Sc1 includes the captured image Img1 that has been captured, and a message Msg1 "please bring your hand closer" requesting to place the hand within the field of view of the camera 13.

The second alert screen Sc2 is generated in the processing of step St23 of the terminal device P1 when it is determined that the focus distance at which the captured image is captured is less than the minimum distance within the predetermined range. The second alert screen Sc2 includes the captured image Img2 that has been captured, and a message Msg2 "please move your hand away" requesting the user to move his/her hand away from the camera 13.

The third alert screen Sc3 is generated in the processing of step St24 of the terminal device P1 when it is determined that the focus distance at which the captured image is captured is not less than the minimum distance within the predetermined range. The third alert screen Sc3 includes the captured image Img3 that has been captured, and a message Msg3 "please hold your hand" requesting the user to hold his/her hand.

The instruction screen Sc4 is generated in the processing of step St26 of the terminal device P1 when it is determined that the focus distance at which the captured image is captured is equal to or greater than the minimum focus distance. The instruction screen Sc4 includes the captured image Img4 that has been captured, and a message Msg4 "please keep your hand stationary" requesting that the current fingertip position with respect to the camera 13 be maintained.

### (Embodiment 2)

An example has been described in which the terminal device P1 according to Embodiment 1 performs fingerprint data registration or authentication by itself. In a biometric information acquisition system 100 according to Embodiment 2, an example will be described in which a terminal device P1A captures a captured image for acquiring the fingerprint data and a server S1 performs the fingerprint data registration or authentication.

The terminal device P1A according to Embodiment 2 has the same configuration as the terminal device P1 according to Embodiment 1. Therefore, in the following description of the biometric information acquisition system 100 according to Embodiment 2, the same components as those of the terminal device P1 according to Embodiment 1 are denoted by the same reference numerals, and the description thereof will be omitted.

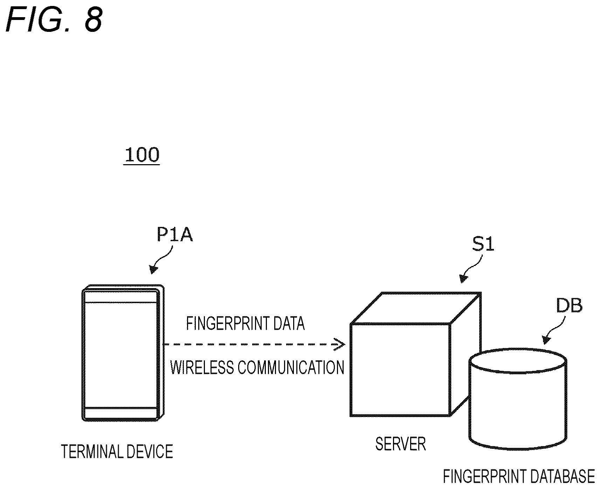

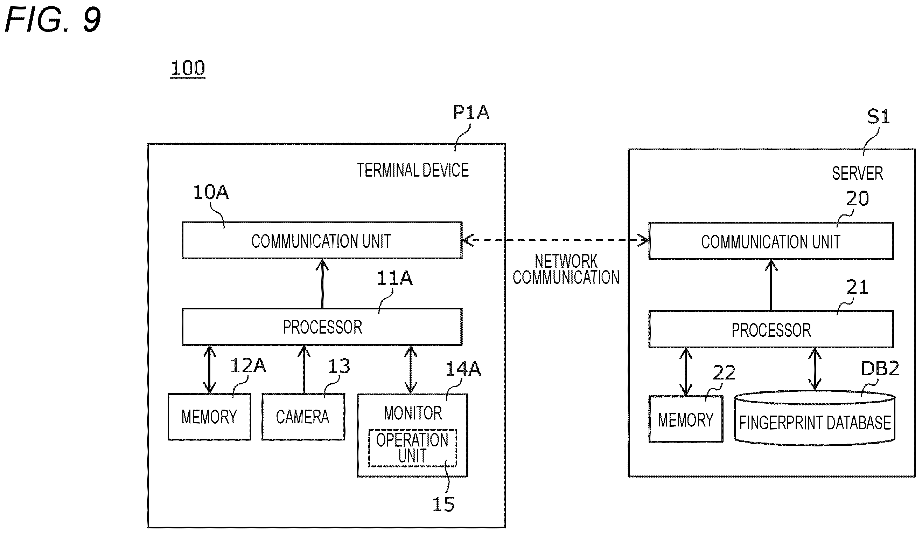

A structure and an internal structure of the biometric information acquisition system 100 according to Embodiment 2 will be described with reference to FIGS. 8 and 9. FIG. 8 is a diagram illustrating an example of the biometric information acquisition system 100 according to Embodiment 2. FIG. 9 is a block diagram illustrating an internal configuration example of the biometric information acquisition system 100 according to Embodiment 2.

The biometric information acquisition system 100 according to Embodiment 2 includes the terminal device P1A and the server S1. In the biometric information acquisition system 100 according to Embodiment 2, the terminal device P1A performs the processing of acquiring a captured image in the same manner as the terminal device P1 in Embodiment 1, and the server S1 performs the fingerprint data registration or authentication. The number of terminal devices P1A may be plural.

The terminal device P1A as an example of the biometric information acquisition device performs the processing of steps St11 to St36 and step St38 in the operation procedures illustrated in FIGS. 2 and 3. The terminal device P1A includes a communication unit 10A, a processor 11A, a memory 12A, the camera 13, and a monitor 14A.

The communication unit 10A is implemented by a communication interface circuit for transmitting and receiving data to and from the server S1 by wired communication or wireless communication. The communication unit 10A transmits each of the M captured images output from the processor 11A and the user information to the server S1. The communication unit 10A acquires information on a fingerprint registration result or authentication result transmitted from the server S1 and outputs the information to the processor 11A.

The processor 11A, which is an example of an acquisition unit, a determination unit, a control unit, and an calculation unit, is formed using, for example, a CPU or an FPGA, and executes various processes and controls in cooperation with the memory 12A. Specifically, the processor 11A refers to programs and data stored in the memory 12A and executes the programs to realize various functions related to capturing an image of a fingerprint.

The memory 12A includes, for example, a RAM as a work memory used when each processing of the processor 11A is executed, and a ROM that stores a program and data that define an operation of the processor 11A. The RAM temporarily stores data or information generated or acquired by the processor 11A. The program that defines the operation of the processor 11A is written into the ROM. The memory 12A stores each of the M captured images output from the processor 11A and the user information on the user.

The memory 12A records the table, the trained learning model, and the like for determining the focus step size of the camera 13 within the determined focus section based on the size of the field of view of the camera 13 and the size (area) of the fingertip with respect to the size of the field of view of the camera 13. The table and the learning model may determine the focus step size of the camera 13 based on the size of the field of view of the camera 13, the size (area) of the fingertip with respect to the size of the field of view of the camera 13, and the type of the fingertip (for example, the middle finger, the index finger, or the like).

The monitor 14A is implemented using, for example, an LCD or an organic EL. The monitor 14A outputs and displays the captured image captured by the camera 13 or various screens generated by the processor 11A (for example, the first alert screen Sc1 and the second alert screen Sc2 illustrated in FIG. 6, the third alert screen Sc3 and the instruction screen Sc4 illustrated in FIG. 7, a screen for notifying an authentication result (not illustrated), and the like).

The server S1 performs the processing of step St37 in the operation procedures illustrated in FIGS. 2 and 3. The server S1 includes a communication unit 20, a processor 21, a memory 22, and a fingerprint database DB2.

The communication unit 20 is implemented by a communication interface circuit for transmitting and receiving data to and from the terminal device P1A by wired communication or wireless communication. The communication unit 20 outputs the fingerprint data transmitted from the terminal device P1A to the processor 21. The communication unit 20 transmits the registration result or the fingerprint authentication result of the fingerprint data output from the processor 21 to the terminal device P1A.

The processor 21 is implemented by using, for example, a CPU or an FPGA, and executes various processing and controls in cooperation with the memory 22. Specifically, the processor 21 refers to the programs and data stored in the memory 22 and executes the programs to realize various functions related to the registration of the fingerprint.

The memory 22 includes, for example, a RAM as a work memory used when each processing of the processor 21 is executed, and a ROM that stores a program and data defining an operation of the processor 21. The RAM temporarily stores data or information generated or acquired by the processor 21. The program that defines the operation of the processor 21 is written into the ROM.

In addition, the memory 22 may record a table, a learned learning model, and the like for determining a focus step size of any camera in the determined focus section based on the size of the field of view of any camera and the size (area) of the fingertip with respect to the size of the field of view. The table and the learning model may determine the focus step size of any camera based on the size of the field of view of any camera, the size (area) of the fingertip with respect to the size of the field of view of the camera, and the type of the fingertip (for example, the middle finger, the index finger, or the like).

The fingerprint database DB2 is a so-called storage, and is implemented by a storage medium such as a flash memory, an HDD, or an SSD. The fingerprint database DB2 stores (registers) and manages the fingerprint data and the user information transmitted from the terminal device P1A for each user. The fingerprint database DB2 may be configured by an external storage or the like externally connected to the server S1 and configured separately.

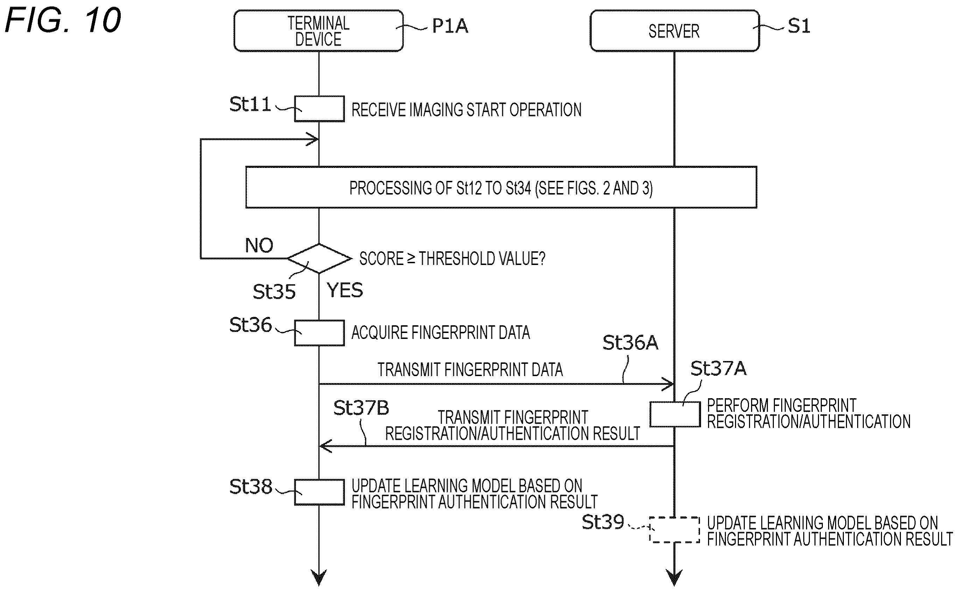

Next, an operation procedure example of the biometric information acquisition system 100 according to Embodiment 2 will be described with reference to FIG. 10. FIG. 10 is a sequence diagram illustrating the operational procedure example of the biometric information acquisition system 100 according to Embodiment 2.

In the processing of the terminal device P1A in the sequence illustrated in FIG. 10, the processing of steps St11 to St36 is the same as the processing of steps St11 to St36 illustrated in FIG. 2, and thus the description thereof will be omitted.

The terminal device P1A determines whether the score of the extracted captured image is equal to or greater than the threshold value (St35).

When it is determined in processing of step St35 that the score of the extracted captured image is equal to or greater than the threshold value (St35, YES), the terminal device P1A acquires, as the fingerprint data of the user, the fingerprint image obtained by cutting out the area in which the fingertip is shown from the captured image or the feature data indicating the individuality of the user extracted from the fingerprint shown in the fingerprint image (St36). The terminal device P1A transmits the acquired fingerprint data to the server S1 (St36A). When performing the registration of the fingerprint data, the terminal device P1A transmits the fingerprint data and the user information of the user to the server S1 in association with each other.

On the other hand, when it is determined in the processing of step St35 that the score of the extracted captured image is not equal to or greater than the threshold value (St35, NO), the terminal device P1A returns to the processing of step St13, switches the imaging mode of the camera 13 from the manual imaging to the autofocus imaging, generates the re-imaging command (the control command) requesting re-capturing of an image of the fingertip of the user, and outputs the re-imaging command to the camera 13.

When performing the registration of the fingerprint data, the server S1 stores (registers) the fingerprint data transmitted from the terminal device P1A and the user information in the fingerprint database DB2 to perform the fingerprint registration of the user (St37A). The server S1 generates the fingerprint registration result of the user and transmits the fingerprint registration result to the terminal device P1A (St37B).

When performing the fingerprint authentication, the server S1 collates the fingerprint data transmitted from the terminal device P1A with at least one piece of fingerprint data stored (registered) in the fingerprint database DB2 to perform the fingerprint authentication of the user (St37A). The server S1 generates the fingerprint authentication result of the user and transmits the fingerprint authentication result to the terminal device P1A (St37B).

When performing the fingerprint authentication, the terminal device P1A updates (relearns) information such as the learning model or the table for determining the focus step size based on the fingerprint registration/authentication result of the user transmitted from the server S1, the score of the fingerprint data used for fingerprint authentication, and the information on the focus step size corresponding to the fingerprint data used for fingerprint authentication (St38). When it is determined that the fingerprint authentication of the user is unsuccessful based on the fingerprint authentication result of the user, the terminal device P1A may omit the processing of step St38. The processing of step St38 may be omitted in the registration processing of the fingerprint data.

In the processing of step St36A, the server S1 may acquire the score of the fingerprint data and the information on the focus step size corresponding to the fingerprint data used for fingerprint authentication from the terminal device P1A together with the fingerprint data of the user. In such a case, the server S1 may update (relearn) information such as the learning model or the table for determining the focus step size based on the fingerprint authentication result of the user, the score of the fingerprint data, and the information on the focus step size corresponding to the fingerprint data (St39).

When the fingerprint authentication of the user is unsuccessful or when the registration processing of the fingerprint data is performed, the server S1 may omit the processing of step St39. Accordingly, when there are a plurality of terminal devices P1A, the server S1 can update (relearn) the learning model or the table more efficiently, and distribute (transmit) the updated (relearned) learning models or tables to the plurality of terminal devices P1A, thereby simultaneously updating the learning models or tables recorded by all the terminal devices P1A.

As described above, the terminal devices P1, P1A (an example of the biometric information acquisition device) according to Embodiment 1 and Embodiment 2 include the camera 13 configured to capture an image of a fingertip of a user (an example of a subject) in a non-contact state under each of a first focus control and a second focus control, the processors 11, 11A (an example of an acquisition unit) configured to acquire a first captured image captured under the first focus control, the processors 11, 11A (an example of a measurement unit) configured to measure a size of the fingertip of the subject with respect to an entire area (that is, the field of view of the camera 13) of the first captured image, the processors 11, 11A (an example of a determination unit) configured to determine a focus step size of the camera 13 under the second focus control based on the size of the fingertip and cause the camera 13 to capture an image within a focus section, within which an image is captured under the second focus control, at the focus step size, and the processors 11, 11A (an example of a control unit) configured to acquire any one second captured image among M (M is an integer of 2 or more) second captured images captured under the second focus control.

Accordingly, the terminal devices P1, P1A according to Embodiment 1 and Embodiment 2 can determine the focus step size of the camera 13 for capturing a captured image (fingerprint data) suitable for fingerprint authentication based on the size of the captured fingertip. For example, when the size of the fingertip of the user is 40% or more with respect to the field of view of the camera 13, the terminal devices P1, P1A determine that the thickness of the fingertip of the user is large and set the focus step size to 2 mm, and when the size of the fingertip of the user is less than 40% with respect to the field of view of the camera 13, the terminal devices P1, P1A determine that the thickness of the fingertip of the user is small and set the focus step size to 1 mm. In addition, the terminal devices P1, P1A can efficiently capture a captured image (fingerprint data) suitable for fingerprint authentication by changing based on the size of the fingertip in particular.

The processors 11, 11A of the terminal devices P1, P1A according to Embodiment 1 and Embodiment 2 further acquire first focus distance information at which the first captured image is captured. The processors 11, 11A determine the focus step size based on the first focus distance information and the size of the fingertip. Accordingly, the terminal devices P1, P1A according to Embodiment 1 and Embodiment 2 can calculate the size of the fingertip with respect to the field of view of the camera 13, and thus can determine the focus step size of the camera 13 for capturing the captured image (the fingerprint data) suitable for fingerprint authentication.

The processors 11, 11A of the terminal devices P1, P1A according to Embodiment 1 and Embodiment 2 specify which finger the fingertip appearing in the first captured image is. The processors 11, 11A determine the focus step size based on information on the specified finger and the size of the fingertip. Accordingly, the terminal devices P1, P1A according to Embodiment 1 and Embodiment 2 can estimate the thickness of the fingertip with higher accuracy, and can determine the focus step size of the camera 13 for capturing the captured image (the fingerprint data) suitable for fingerprint authentication.

In the terminal devices P1, P1A according to Embodiment 1 and Embodiment 2, the first focus control is an autofocus control. The second focus control is a manual focus control. As a result, the terminal devices P1, P1A according to Embodiment 1 and Embodiment 2 can more efficiently acquire the captured image (the fingerprint data) suitable for fingerprint authentication by capturing images, at the step size corresponding to the size of the fingertip by the manual control, within the focus section determined based on the focus distance to the fingertip of the user acquired by the autofocus control.

The processors 11, 11A of the terminal devices P1, P1A according to Embodiment 1 and Embodiment 2 acquire the first focus distance information at which the first captured image is captured. The processors 11, 11A determine a focus section within which an image is captured under the second focus control based on the first focus distance information. Accordingly, the terminal devices P1, P1A according to Embodiment 1 and Embodiment 2 can more efficiently determine the focus section within which the captured image (the fingerprint data) suitable for fingerprint authentication can be captured based on a distance of the fingertip of the user indicated by a focus distance.

The processors 11, 11A in the terminal devices P1, P1A according to Embodiment 1 and Embodiment 2 determine whether the first focus distance information is within a predetermined range (an example of a predetermined focus range) within which biometric information on the subject is capable of being acquired, and determine the focus section based on the first focus distance information when it is determined that the first focus distance information is within the predetermined focus range. Accordingly, the terminal devices P1, P1A according to Embodiment 1 and Embodiment 2 can more efficiently acquire the captured image (the fingerprint data) suitable for fingerprint authentication.

As described above, when it is determined that the first focus distance information is not within the predetermined range, the processors 11, 11A in the terminal devices P1, P1A according to Embodiment 1 and Embodiment 2 generate and output a notification requesting the subject to change a position of the fingertip with respect to the camera 13, set focus coordinates of the camera 13 at a position of the fingertip shown in the first captured image, generate a control command to re-capture the first captured image, and cause the camera 13 to perform the first focus control based on the control command. Accordingly, the terminal devices P1, P1A according to Embodiment 1 and Embodiment 2 can support focus processing on the fingertip of the user shown in the re-captured image by focusing on the position (the focus coordinates) of the fingertip of the user shown in the captured first captured image, and can more efficiently acquire the captured image in which the fingertip is in focus.

The processors 11, 11A in the terminal devices P1, P1A according to Embodiment 1 and Embodiment 2 determine whether the first focus distance information is included in the focus section and is equal to or greater than the minimum focus distance at which the M second captured images are capable of being captured, and determine the focus section based on the first focus distance information when it is determined that the first focus distance information is equal to or greater than the minimum focus distance. Accordingly, the terminal devices P1, P1A according to Embodiment 1 and Embodiment 2 can determine whether the focus section is a section where the M captured images can be captured.

When it is determined that the first focus distance information is included in the focus section and is not equal to or greater than the minimum focus distance, the processors 11, 11A in the terminal devices P1, P1A according to Embodiment 1 and Embodiment 2 generate and output a notification requesting the subject to change a position of the fingertip with respect to the camera, set focus coordinates of the camera 13 at the position of the fingertip shown in the first captured image, generate a control command to re-capture the first captured image, and cause the camera 13 to perform the first focus control based on the control command. Accordingly, the terminal devices P1, P1A according to Embodiment 1 and Embodiment 2 can support the focus processing on the fingertip of the user shown in the re-captured image by focusing on the position (the focus coordinates) of the fingertip of the user shown in the captured first captured image, and can more efficiently acquire the captured image in which the fingertip is in focus.

When it is determined that a contour of the fingertip is detected from the first captured image, the processors 11, 11A in the terminal devices P1, P1A according to Embodiment 1 and Embodiment 2 determine the focus section based on the first focus distance information. Accordingly, the terminal devices P1, P1A according to Embodiment 1 and Embodiment 2 can determine the focus section for more efficiently acquiring the captured image that is suitable for fingerprint authentication and that is focused on the fingerprint of the user, based on the focus distance at which the contour of the fingertip of the user is detected.

When it is determined that the contour of the fingertip is not detected from the first captured image, the processors 11, 11A of the terminal devices P1, P1A according to Embodiment 1 and Embodiment 2 set the focus coordinates of the camera at the center position of an image sensor (not illustrated) of the camera, generate the control command to re-capture the first captured image, and cause the camera to perform the first focus control based on the control command. Accordingly, the terminal devices P1, P1A according to Embodiment 1 and Embodiment 2 focus the focus coordinates at the center position of the image sensor (not illustrated) of the camera 13 at the time of re-capturing images, and thus it is possible to more effectively prevent acquisition of the captured image in which the contour of the fingertip cannot be detected due to the focus coordinates not being determined.

The terminal devices P1, P1A according to Embodiment 1 and Embodiment 2 further includes the processors 11, 11A (an example of the calculation unit) configured to calculate a score indicating a degree of focus on the fingerprint of the fingertip shown in the second captured image. The processors 11, 11A acquire a second captured image having the largest calculated evaluation value among the M second captured images. Accordingly, the terminal devices P1, P1A according to Embodiment 1 and Embodiment 2 can acquire the captured image (the fingerprint data) more suitable for fingerprint authentication among the acquired M captured images.

As described above, the processors 11, 11A in the terminal devices P1, P1A according to Embodiment 1 and Embodiment 2 acquire the second captured image having the largest calculated evaluation value among the M second captured images and having the evaluation value equal to or greater than a threshold value. Accordingly, the terminal devices P1, P1A according to Embodiment 1 and Embodiment 2 can acquire the captured image (the fingerprint data) that is more suitable and can be used for fingerprint authentication among the acquired M captured images.

The processors 11, 11A of the terminal devices P1, P1A according to Embodiment 1 and Embodiment 2 temporarily store M second captured images respectively captured at M different second focus distances among the second captured images captured by the second focus control, and acquire and record any one second captured image among the M second captured images temporarily stored. Accordingly, the terminal devices P1, P1A according to Embodiment 1 and Embodiment 2 can determine the focus step size (that is, the first to N-th focus distances) of the camera 13 for capturing the captured image (the fingerprint data) suitable for fingerprint authentication based on the size of the fingertip of the user. Further, the terminal devices P1, P1A can more efficiently acquire the captured image (the fingerprint data) suitable for fingerprint authentication using the M captured images among the captured images captured at the determined first to N-th focus distances.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiments described above may be combined freely in a range without departing from the spirit of the invention.

The present application is based on a Japanese patent application filed on March 29, 2023 (Japanese Patent Application No. 2023-053714), and the contents thereof are incorporated herein by reference.

### INDUSTRIAL APPLICABILITY

The present disclosure is useful as presentation of a biometric information acquisition device and a biometric information acquisition method that can more efficiently acquire fingerprint data suitable for fingerprint authentication in a non-contact state.

### REFERENCE SIGNS LIST

10, 10A, 20 communication unit
11, 11A, 21 processor
12, 12A, 22 memory
13 camera
14, 14A monitor
15 operation unit
100 biometric information acquisition system
DB1, DB2 fingerprint database
P1, P1A terminal device
S1 server

## Claims

1. A biometric information acquisition device comprising:
a camera that captures an image of a fingertip of a subject in a non-contact state under each of a first focus control and a second focus control;
an acquisition unit that acquires a first captured image captured under the first focus control;
a measurement unit that measures a size of the fingertip of the subject with respect to an entire area of the first captured image;
a determination unit that determines a focus step size of the camera under the second focus control based on the size of the fingertip and cause the camera to capture an image within a focus section, within which an image is captured under the second focus control, at the focus step size; and
a control unit that acquires any one second captured image among M (M is an integer of 2 or more) second captured images captured under the second focus control.

2. The biometric information acquisition device according to claim 1, wherein
the acquisition unit further acquires first focus distance information at which the first captured image is captured, and
the determination unit determines the focus step size based on the first focus distance information and the size of the fingertip.

3. The biometric information acquisition device according to claim 1, wherein
the measurement unit specifies which finger the fingertip appearing in the first captured image is, and
the determination unit determines the focus step size based on information on the specified finger and the size of the fingertip.

4. The biometric information acquisition device according to claim 1, wherein
the first focus control is an autofocus control, and
the second focus control is a manual focus control.

5. The biometric information acquisition device according to claim 1, wherein
the acquisition unit acquires first focus distance information at which the first captured image is captured, and
the determination unit determines a focus section within which an image is captured under the second focus control based on the first focus distance information.

6. The biometric information acquisition device according to claim 5, wherein
the determination unit
determines whether the first focus distance information is within a predetermined focus range within which biometric information on the subject is capable of being acquired, and
determines the focus section based on the first focus distance information when it is determined that the first focus distance information is within the predetermined focus range.

7. The biometric information acquisition device according to claim 6, wherein
in a case that it is determined that the first focus distance information is not within the predetermined focus range, the determination unit generates and outputs a notification requesting the subject to change a position of the fingertip with respect to the camera, sets focus coordinates of the camera at the position of the fingertip shown in the first captured image, generates a control command to re-capture the first captured image, and causes the camera to perform the first focus control based on the control command.

8. The biometric information acquisition device according to claim 6, wherein
the determination unit
determines whether the first focus distance information is included in the focus section and is equal to or greater than a minimum focus distance at which the M second captured images are capable of being captured, and
determines the focus section based on the first focus distance information when it is determined that the first focus distance information is equal to or greater than the minimum focus distance.

9. The biometric information acquisition device according to claim 8, wherein
in a case that it is determined that the first focus distance information is included in the focus section and is not equal to or greater than the minimum focus distance, the determination unit generates and outputs a notification requesting the subject to change a position of the fingertip with respect to the camera, sets focus coordinates of the camera at a position of the fingertip shown in the first captured image, generates a control command to re-capture the first captured image, and causes the camera to perform the first focus control based on the control command.

10. The biometric information acquisition device according to claim 5, wherein
in a case that it is determined that a contour of the fingertip is detected from the first captured image, the determination unit determines the focus section based on the first focus distance information.

11. The biometric information acquisition device according to claim 10, wherein
in a case that it is determined that the contour of the fingertip is not detected from the first captured image, the determination unit sets focus coordinates of the camera at a center position of an image sensor of the camera, generates a control command to re-capture the first captured image, and causes the camera to perform the first focus control based on the control command.

12. The biometric information acquisition device according to claim 1, further comprising
a calculation unit configured to calculate a score indicating a degree of focus on a fingerprint of a fingertip shown in the second captured image, wherein
the control unit acquires a second captured image having a largest calculated evaluation value among the M second captured images.

13. The biometric information acquisition device according to claim 12, wherein
the control unit acquires a second captured image having the largest calculated evaluation value among the M second captured images and having the evaluation value equal to or greater than a threshold value.

14. The biometric information acquisition device according to claim 1, wherein
the control unit temporarily stores the M second captured images respectively captured at M different second focus distances among the second captured images captured by the second focus control, and acquires and records any one second captured image among the M second captured images temporarily stored.

15. A biometric information acquisition method performed by a biometric information acquisition device capable of acquiring a captured image obtained by capturing an image of a fingertip of a subject, the biological information acquisition method comprising:
capturing an image of a finger of the subject in a non-contact state under a first focus control by a camera;
acquiring a first captured image captured under the first focus control;
measuring a size of the fingertip of the subject with respect to an entire area of the first captured image;
determining a focus step size of the camera for capturing an image under a second focus control different from the first focus control based on the size of the fingertip;
capturing an image within a focus section, within which an image is captured, at the focus step size by the second focus control by the camera; and
acquiring any one second captured image among M (M is an integer of 2 or more) second captured images captured under the second focus control.
